# EUROPÄISCHE PATENTANMELDUNG

(11) **EP 4 455 657 A1**
(43) Veröffentlichungstag der Anmeldung: **30.10.2024**
(21) Anmeldenummer: 23170557.5
(22) Anmeldetag: 28.04.2023
(51) Int. Cl.: G01N 29/024, G01N 29/036, G01N 29/44

(54) **ELEKTROLYSEUR, VERFAHREN ZUR KONZENTRATIONSMESSUNG EINER GASZUSAMMENSETZUNG IN EINEM ELEKTROLYSEUR UND COMPUTERPROGRAMMPRODUKT**

(71) Anmelder: Siemens Aktiengesellschaft, 80333 München (DE)
(72) Erfinder: Heffels, Camiel, 76297 Stutensee-Büchig (DE)
(74) Vertreter: Siemens Patent Attorneys

(57) **Zusammenfassung**

Die Erfindung betrifft einen Elektrolyseur (10), der eine Trennmembran (16) zum Herstellen von Wasserstoff (13) und Sauerstoff (15) aus Wasser umfasst. Der Elektrolyseur (10) weist eine erste Leitung (12) zum Abführen des Wasserstoffs (15) in einer Wasserstoffströmung (17) auf, wobei im Bereich der ersten Leitung (12) eine Messvorrichtung (20) zum Erfassen von Verunreinigungen (18), beispielsweise Sauerstoffverunreinigungen, in der Wasserstoffströmung (17) angeordnet ist. Erfindungsgemäß ist die Messvorrichtung (20) dazu ausgebildet ist, eine akustische Kenngröße in der Wasserstoffströmung (17) zu erfassen. Die Erfindung betrifft auch ein Verfahren (100), mit dem eine Konzentration (32) von Verunreinigungen (18) in einem Elektrolyseur (10) ermittelbar ist. Des Weiteren betrifft die Erfindung ein Computerprogrammprodukt (45), mit dem ein solches Verfahren (100) ausführbar ist und ein Simulationsprogrammprodukt (60), mit dem das Betriebsverhalten eines solchen Elektrolyseurs (10) simulierbar ist. Ferner betrifft die Erfindung eine Verwendung einer Messvorrichtung (20), die zum Messen von Schallgeschwindigkeit (42) in einem Gasgemisch (11) ausgebildet ist, in einem Elektrolyseur (10).

## Beschreibung

Die Erfindung betrifft einen Elektrolyseur und ein Verfahren zur Konzentrationsmessung einer Gaszusammensetzung in einem solchen Elektrolyseur. Ebenso betrifft die Erfindung ein Computerprogrammprodukt zum Durchführen eines solchen Verfahrens und eine entsprechende Verwendung einer Messvorrichtung. Ferner betrifft die Erfindung ein Simulationsprogrammprodukt zum Simulieren eines Betriebsverhaltens eines entsprechenden Elektrolyseurs.

Aus der Internationalen Anmeldung WO 2022/039596 A1 ist ein MEMS-basiertes Mikrophon bekannt, das einen Körper mit einer Ausnehmung, einen Resonator und ein Belüftungssystem aufweist. Der Resonator ist dazu ausgebildet, bei einer mechanischen Resonanzfrequenz zu vibrieren, die höher ist als eine charakteristische Gleichgewichtsfrequenz.

Der Artikel "Speed of sound measurements in gas-mixtures at varying compositions using an ultrasonic gas flow meter with silicon based transducers" von Torbjörn Löfqvist, Kestutis Sokas und Jerker Delsing beschreibt eine Schallgeschwindigkeitsmessung in ein-, zwei- und dreiatomigen Gasen. Dabei wird Luft oder Stickstoff als Zusatz Argon, Sauerstoff oder Kohlendioxid zugegeben. Der Artikel offenbart, dass durch Temperatur- und Schallgeschwindigkeitsmessung die Konzentrationen und die molare Zusammensetzung der entsprechenden Gasgemische ermittelbar sind.

Die Patentanmeldung IN 201941019317 A offenbart ein Verfahren zum Ermitteln von Konzentrationen von Gasen in einem Gasgemisch. Das Verfahren basiert auf fotoakustischer Spektroskopie und nutzt, dass die Konzentrationen von Bestandteilen eines Gasgemisches die darin vorliegende Schallgeschwindigkeit beeinflussen.

Beim Betrieb von Elektrolyseuren werden molekularer Wasserstoff und Sauerstoff gebildet. Die Entstehung eines zündfähigen Knallgasgemisches ist zu vermeiden. Durch Abnutzung einer Trennmembran im Elektrolyseur können auf einer Wasserstoffseite der Trennmembran Sauerstoffverunreinigungen auftreten. Es besteht Bedarf an einer Möglichkeit, derartige Sauerstoffverunreinigungen sicher, schnell und zuverlässig zu erkennen. Der Erfindung liegt die Aufgabenstellung zugrunde, eine Möglichkeit bereitzustellen, die Entstehung von potentiell gefährlichen Gasgemischen in einem Elektrolyseur in vorteilhafter Weise zu erkennen.

Die Aufgabenstellung wird durch einen erfindungsgemäßen Elektrolyseur gelöst. Der Elektrolyseur umfasst eine Trennmembran, die dazu ausgebildet ist, daran eine elektrolytische Trennung von Wasser in Wasserstoff und Sauerstoff vorzunehmen, also in im Wesentlichen molekularen Wasserstoff und im Wesentlichen molekularen Sauerstoff. Der erzeugte Wasserstoff ist hierbei als Wasserstoffströmung abführbar. Ebenso ist der an der Trennmembran erzeugte Sauerstoff als Sauerstoffströmung abführbar. Der Elektrolyseur umfasst ebenfalls eine erste Leitung, die dazu ausgebildet ist, die Wasserstoffströmung abzuführen, beispielsweise in einen Kompressor oder Behälter. Im Bereich der ersten Leitung ist eine Messvorrichtung angeordnet, die zum Erfassen von Verunreinigungen, beispielsweise Sauerstoffverunreinigungen und/oder Stickstoffverunreinigungen, in der Wasserstoffströmung ausgebildet ist. Die Messvorrichtung kann dazu hydraulisch mit der ersten Leitung verbunden sein und von einem Teil der Wasserstoffströmung selbst durchströmbar sein. Die Messvorrichtung kann dazu ausgebildet sein, die Wasserstoffströmung periodisch oder permanent auf Verunreinigungen, insbesondere Sauerstoffverunreinigungen und/oder Stickstoffverunreinigungen, zu überwachen. Erfindungsgemäß ist die Messvorrichtung dazu ausgebildet, eine akustische Kenngröße in der Wasserstoffströmung zu erfassen.

Durch das Erfassen der akustischen Kenngröße ist das Vorhandensein von Sauerstoffverunreinigungen in der Wasserstoffströmung erfassbar. Die Erfindung basiert unter anderem auf der Erkenntnis, dass Sauerstoffverunreinigungen auch bei geringen Konzentrationen zu signifikanten Änderungen von akustischen Kenngrößen in einer Wasserstoffströmung führen. Insbesondere sind die Änderungen der akustischen Kenngrößen, die durch Sauerstoffverunreinigungen in Wasserstoffströmungen hervorgerufen werden, deutlich stärker als solche, die von Wasserstoffverunreinigungen in Sauerstoffströmungen bei entsprechend umgekehrten Konzentrationsverhältnissen hervorgerufen werden. Dadurch ist beim erfindungsgemäßen Elektrolyseur eine frühzeitige Erkennung von Sauerstoffverunreinigungen in der Wasserstoffströmung gewährleistet. Ebenso ist durch das Erkennen einer vorhandenen Sauerstoffverunreinigung in der Wasserstoffströmung eine beschädigte oder abgenutzte Trennmembran im Elektrolyseur beschleunigt selbsttätig erkennbar. Unterhalb einer Schwelle, bei der die Sauerstoffverunreinigungen eine Explosionsgefahr hervorrufen können, erlaubt das schnelle Erkennen einer beschädigten oder abgenutzten Trennmembran es, diese frühzeitig auszutauschen, um einen effizienten Betrieb des Elektrolyseurs zu gewährleisten. Ferner ist nach einem Spülen einer Elektrolysezelle mit Stickstoff ein Rückgang von Stickstoffverunreinigungen erfassbar. Durch eine präzise Messung ist erkennbar, wenn wieder ein Produktivbetrieb des Elektrolyseurs mit hinreichend reiner Wasserstoffausbeute aufgenommen werden kann. Der erfindungsgemäße Elektrolyseur ist dadurch in einfacher Weise dauerhaft sicher, zuverlässig und wirtschaftlich betreibbar.

In einer Ausführungsform des beanspruchten Elektrolyseurs ist die akustische Kenngröße, die zum Erfassen der Verunreinigungen verwendet wird, eine Schallgeschwindigkeit in der Wasserstoffströmung. Insbesondere die Schallgeschwindigkeit in einer Wasserstoffströmung ändert sich signifikant, wenn darin eine Sauerstoffverunreinigung und/oder eine Stickstoffverunreinigung auftritt. Bei einer Zugabe von 0,1 Volumenprozent Wasserstoff in eine ansonsten reine Sauerstoffströmung ändert sich die Dichte eines solchen Gasgemisch um circa 0,001 kg/m³ von 1,428 kg/m³ auf 1,429 kg/m³. Bei einer Zugabe von 0,1 Volumenprozent Sauerstoff in eine ansonsten reine Wasserstoffströmung ändert sich die Dichte eines solchen Gasgemischs ebenso um circa 0,001 kg/m³ von 0,085 kg/m³ auf 0,084 kg/m³. Demzufolge liegt in der Wasserstoffströmung mit Sauerstoffverunreinigung, verglichen mit der Sauerstoffströmung mit Wasserstoffverunreinigung, eine circa 16-fach höhere relative Dichteänderung vor. Eine vergleichbare Wirkung liegt wegen der ähnlichen Molekulargewichte von Sauerstoff und Stickstoff auch bei einer Stickstoffverunreinigung vor. Die Schallgeschwindigkeit im entsprechenden Gasgemisch ist wiederum von dessen Dichte abhängig. Infolgedessen erlaubt eine Erfassung der Schallgeschwindigkeit in der Wasserstoffströmung, in die eine Sauerstoffverunreinigung und/oder Stickstoffverunreinigung eintritt, somit ein Erfassen einer relativen Dichteänderung. Dementsprechend kann die Messvorrichtung am beanspruchten Elektrolyseur als Schallgeschwindigkeitsmessvorrichtung ausgebildet sein. Derartige Schallgeschwindigkeitsmessvorrichtungen sind in einfacher Weise verfügbar und bieten eine erhöhte Messgenauigkeit. Hierdurch ist eine in die Wasserstoffströmung eintretende Verunreinigung bereits bei geringen Sauerstoff- bzw. Stickstoffkonzentrationen zuverlässig erkennbar.

Des Weiteren kann die Messvorrichtung dazu ausgebildet sein, eine akustische Resonanz in einer Stoffprobe, die der Wasserstoffströmung entnommen ist, anzuregen und zu erfassen. Die Messvorrichtung kann eine im Wesentlichen längliche, also prismatische, Messkammer aufweisen, in die die Stoffprobe einleitbar ist. Die Messkammer kann an beiden Enden Stirnflächen aufweisen und dazu ausgebildet sein, dass die eingeleitete Stoffprobe aus der Wasserstoffströmung die Messkammer im Wesentlichen in länglicher Richtung, also von einer Stirnfläche zur gegenüberliegenden Stirnfläche, durchströmt. Zum Anregen der akustischen Resonanz kann zumindest eine der Stirnflächen mit einem Schallemitter, auch Transducer genannt, versehen sein. Der Schallemitter kann insbesondere als Piezo-Transducer ausgebildet sein. Der Schallemitter ist durch Ansteuern mittels eines Frequenzgenerators durchstimmbar, der mit einer Steuereinheit verbunden sein kann. Die anzuregende akustische Resonanz kann eine erste, zweite, usw. harmonische Schwingungsmode sein. Dadurch ist präzise eine Frequenzmessung der harmonischen Schwingungsmode in der Stoffprobe durchführbar, die ein zuverlässiges Ermitteln darin vorliegenden Schallgeschwindigkeit erlaubt. Insbesondere kann der Frequenzgenerator dazu ausgebildet sein, eine dritte oder vierte harmonische Longitudinalschwingung in der Messkammer anzuregen. Diese zeigen bei steigender Konzentration von Sauerstoff in der Stoffprobe eine signifikante Veränderung der Resonanzfrequenz. Dadurch wird eine einfache und gleichzeitig präzise Messung der Schallgeschwindigkeit gewährleistet. Dadurch wird die Zuverlässigkeit bei der Erfassung von Verunreinigungen, insbesondere von Sauerstoffverunreinigungen, in der Wasserstoffströmung weiter gesteigert.

In einer weiteren Ausführungsform des beanspruchten Elektrolyseurs verfügt die Messvorrichtung über ein Mikrofon, das in der Messkammer angeordnet sein kann. Das Mikrofon kann entlang einer Hauptachse in einem mittleren Abschnitt angeordnet sein, insbesondere mittig entlang der Messkammer. Die Hauptachse erstreckt sich im Wesentlichen von einer Stirnfläche der Messkammer zur gegenüberliegenden Stirnfläche. Die längliche Richtung der Messkammer ist im Wesentlichen durch die Ausrichtung der Hauptachse definiert. Durch die mittige Positionierung des Mikrofons liegen dort Wellenbäuche von harmonischen Schwingungen geradzahliger Ordnung vor. Im Bereich der Wellenbäuche, insbesondere an deren Extrempunkten, liegt eine maximale Amplitude, also akustische Lautstärke vor. Im Falle einer harmonischen Schwingung einer geradzahligen Ordnung existiert in der Messkammer stets ein mittiger Wellenbauch, der durch das Mikrofon erfassbar ist. Folglich kommt die Messkammer mit einem einzigen Mikrofon bzw. einer einzigen Mikrofon-Anordnung aus, die entlang der Hauptachse mittig angeordnet ist. Die Messvorrichtung, und damit auch der beanspruchte Elektrolyseur, sind daher kosteneffizient herstellbar. Weiter wird durch die so reduzierte Bauteilanzahl das Risiko von Komponentenausfällen reduziert. Die Messvorrichtung bietet insgesamt eine erhöhte Messgenauigkeit und eine gesteigerte Robustheit.

Darüber hinaus kann die Messvorrichtung mit einer Auswertungseinheit ausgestattet sein, die zu einem Ermitteln einer Konzentration der Verunreinigungen in der Wasserstoffströmung ausgebildet ist. Die Auswertungseinheit kann insbesondere dazu ausgebildet sein, anhand von Messsignalen, die bei Messvorgängen in der Messkammer erzeugt werden, die vorhandene Verunreinigungen zu quantifizieren. Dazu können Änderungen in der Schallgeschwindigkeit in der Stoffprobe aus der Wasserstoffströmung erfasst werden und anhand derer relative Dichteunterschiede gegenüber einer reinen Wasserstoffströmung ermittelt werden. Basierend auf den relativen Dichteunterschieden wiederum kann die Konzentration der Verunreinigungen quantifiziert werden. Die Auswertungseinheit kann dazu über ein geeignet ausgebildetes Computerprogrammprodukt verfügen. Weiter kann die Auswertungseinheit als funktionelle Einheit der Steuereinheit ausgebildet sein, mit der die Messvorrichtung ausgestattet sein kann. Die Auswertungseinheit kann ferner dazu ausgebildet sein, eine Warnung an einen Benutzer und/oder eine Datenschnittstelle auszugeben, wenn die erfasste Konzentration der Sauerstoffverunreinigungen einen vorgebbaren Grenzwert betragsmäßig übersteigt. Korrespondierend kann auch eine Benachrichtigung über eine rückläufige Konzentration an Stickstoffverunreinigungen ausgegeben werden, wenn diese einen entsprechenden vorgebbaren Grenzwert betragsmäßig unterschreitet. Alternativ oder ergänzend kann ein Steuerbefehl zum Vorgeben eines Betriebsmodus des Elektrolyseurs ausgegeben werden. Dadurch ist insgesamt ein selbsttätiges Reaktionsverhalten des Elektrolyseurs zielgerichtet einstellbar. Der beanspruchte Elektrolyseur ist dadurch an eine breite Spanne an Sicherheitsvorgaben anpassbar und ist wirtschaftlich betreibbar.

Ferner kann die Messvorrichtung des beanspruchten Elektrolyseurs mit einer Temperaturmessvorrichtung versehen sein. Die Temperaturmessvorrichtung kann als Temperatursensor ausgebildet sein und dazu ausgebildet sein, eine Temperatur der Stoffprobe in der Messkammer zu erfassen. Ebenso kann die Messvorrichtung dazu ausgebildet sein, basierend auf einer mit der Temperaturmessvorrichtung erfassten Temperatur beim Ermitteln der Schallgeschwindigkeit in der Stoffprobe, eine Temperaturkompensation durchzuführen. Dadurch sind Temperatureinflüsse auf die erfasste Schallgeschwindigkeit ausgleichbar, was eine präzise Konzentrationsmessung ermöglicht. Die Messvorrichtung liefert bei einer breiten Spanne an Temperaturen der Wasserstoffströmung und ist dementsprechend beliebig an der ersten Leitung mit der Wasserstoffströmung positionierbar. Ein vorhandener Elektrolyseur ist dadurch in einfacher Weise nachrüstbar.

In einer weiteren Ausführungsform der Erfindung kann die Messvorrichtung am Elektrolyseur mit einem Drucksensor versehen sein. Die Erfassung einer Konzentration von Sauerstoff, der mit Wasserstoff vermischt ist, ist druckabhängig. Insbesondere liegt bei der Gasdichtemessung ein proportionaler Zusammenhang mit dem Messgasdruck vor. Dementsprechend kann die Messvorrichtung dazu ausgebildet sein, die Konzentration der Verunreinigungen druckkompensiert zu ermitteln. Alternativ oder ergänzend kann die Konzentration an Wasserstoff in der Stoffprobe aus der Wasserstoffströmung druckkompensiert durchgeführt werden. Dadurch wird die erzielbare Messgenauigkeit weiter gesteigert.

Des Weiteren können Mantelflächen, die die Messkammer im Wesentlichen entlang der Hauptachse, also zwischen den Stirnflächen, begrenzen durch einen Profilkörper, insbesondere einen extrudierten Profilkörper, gebildet sein. Der Profilkörper kann eine Wandstärke aufweisen, durch die sich entlang der Mantelflächen eine im Wesentlichen homogene Temperaturverteilung ergibt. Dementsprechend ist die Temperaturverteilung in der Messkammer ebenfalls im Wesentlichen homogen. Der Profilkörper kann aus einem metallischen Werkstoff hergestellt sein, beispielsweise einer Aluminiumlegierung oder einer Kupferlegierung. Je höher die Wärmeleitfähigkeit des Profilkörpers ist, umso besser. Je höher die Wandstärke des Profilkörpers ist, umso thermisch träger ist der Profilkörper, wodurch die homogene Temperaturverteilung in den Mantelflächen und in der Messkammer stabilisiert ist. Profilkörper sind in einer breiten Spanne an Wandstärken kosteneffizient herstellbar. Die Messvorrichtung ist folglich kosteneffizient mit einer verbesserten Reproduzierbarkeit der damit durchgeführten Messungen herstellbar.

Darüber hinaus kann der Elektrolyseur mit einer Datenbank ausgestattet sein, auf der Konzentrationen der SauerstoffVerunreinigungen als historische Messdaten gespeichert sind und auswertbare bereitgestellt sind. Die Datenbank kann als Komponente der Steuereinheit des Elektrolyseurs ausgebildet sein. Die historischen Messdaten können am Elektrolyseur selbst erfasst sein und/oder an baugleichen Elektrolyseuren. Die Datenbank ist durch ein Simulationsprogrammprodukt auswertbar, in dem der Elektrolyseur abgebildet ist, beispielsweise als Digitaler Zwilling. Hierdurch ist eine zielgerichtete Diagnose einer Ursache für einen Anstieg der Konzentration von Sauerstoff-Verunreinigungen in der Wasserstoffströmung durchführbar, was wiederum einen sicheren Betrieb des Elektrolyseurs erlaubt.

Die zugrundeliegende Aufgabenstellung wird ebenso durch ein erfindungsgemäßes Verfahren zum Erfassen einer Verunreinigung in Wasserstoff in einer Wasserstoffströmung in einem Elektrolyseur, beispielsweise von Sauerstoffverunreinigungen und/oder Stickstoffverunreinigungen. Die Wasserstoffströmung wird in einer ersten Leitung geführt. Das Verfahren umfasst einen ersten Schritt, in dem der Elektrolyseur betrieben wird. Im Betrieb des Elektrolyseurs wird an einer Trennmembran molekularer Wasserstoff erzeugt. Bei einer Beschädigung oder Abnutzung der Trennmembran werden Sauerstoffverunreinigungen erzeugt, die zusammen mit dem molekularen Wasserstoff ein Gasgemisch bilden, das in die erste Leitung eingeleitet wird. Nach einem Spülen mit Stickstoff wiederum verbleiben Stickstoffverunreinigungen, die sich mit dem Wasserstoff mischen. Dadurch wird die Reinheit, also die Güte, des herzustellenden Wasserstoffs verringert. Die Verunreinigungen in der Wasserstoffströmung sind im Zuge des erfindungsgemäßen Verfahrens zu detektieren. Das Verfahren weist einen zweiten Schritt auf, in dem eine Schallgeschwindigkeit in dem Gasgemisch ermittelt wird, das durch die erste Leitung geführt ist. Hierzu kann der Elektrolyseur mit einer entsprechenden Messvorrichtung ausgestattet sein, die mit der ersten Leitung hydraulisch verbunden ist. Zum Erfassen der Schallgeschwindigkeit im Gasgemisch kann eine Stoffprobe aus der Wasserstoffströmung in der ersten Leitung in eine Messkammer der Messvorrichtung eingeleitet werden. Im zweiten Schritt erfolgt ebenso ein Vergleichen der erfassten Schallgeschwindigkeit mit einer Referenz-Schallgeschwindigkeit.

Weiter gehört zum erfindungsgemäßen Verfahren ein dritter Schritt, in dem eine Konzentration der Verunreinigungen im Gasgemisch anhand des Resultats des Vergleichs im zweiten Schritt ermittelt wird. Die Differenz zwischen der ermittelten Schallgeschwindigkeit und der Referenz-Schallgeschwindigkeit stellt ein vorteilhaftes Maß für die Höhe der Konzentration an Verunreinigungen in der Wasserstoffströmung, also im Gasgemisch, dar. Ferner wird im dritten Schritt eine Warnung ausgegeben, wenn die ermittelte Konzentration an Sauerstoffverunreinigungen einen vorgebbaren Grenzwert betragsmäßig übersteigt. Die Warnung kann an einen Benutzer und/oder eine Datenschnittstelle ausgegeben werden. Des Weiteren kann ebenso ein Steuerbefehl ausgegeben werden, durch den ein Betriebsmodus des Elektrolyseurs vorgebbar ist. Der Elektrolyseur, insbesondere die Messvorrichtung, kann hierzu mit einer Auswertungseinheit ausgestattet sein, auf der ein entsprechendes Computerprogrammprodukt ausführbar gespeichert sein kann.

Das erfindungsgemäße Verfahren erlaubt es in vorteilhafter Weise, bereits niedrige Konzentrationen an Sauerstoffverunreinigungen zuverlässig zu erfassen und dadurch frühzeitig in den Betrieb des Elektrolyseurs risikomindernd einzugreifen. Insbesondere ist eine beschädigte oder abgenutzte Trennmembran im Elektrolyseur schnell identifizierbar. Durch einen frühzeitigen Austausch der Trennmembran wiederum ist ein besonders effizienter Betrieb des Elektrolyseurs möglich. Ebenso ist identifizierbar, wenn Stickstoffverunreinigungen soweit ausgespült sind, dass Wasserstoff mit einer geforderten Reinheit herstellbar ist. Dies erlaubt einen besonders wirtschaftlichen Betrieb des Elektrolyseurs.

Im beanspruchten Verfahren kann der zugrundeliegende Elektrolyseur gemäß einer der oben dargestellten Ausführungsformen ausgebildet sein. Die Merkmale des oben beschriebenen Elektrolyseurs sind ohne Weiteres auf das beanspruchte Verfahren separate oder kombiniert übertragbar. Das beanspruchte Verfahren ist folglich für eine Vielzahl an unterschiedlichen Elektrolyseuren geeignet.

In einer weiteren Ausführungsform des beanspruchten Verfahrens wird die Schallgeschwindigkeit im zweiten Schritt unter Berücksichtigung einer erfassten Temperatur und/oder eines erfassten Drucks des Gasgemisches ermittelt. Dementsprechend erfolgt das Ermitteln der Schallgeschwindigkeit temperatur- und/oder druckkompensiert. Durch eine Temperaturkompensation und/oder Druckkompensation ist eine Akklimatisierung der zu untersuchenden Stoffprobe, also ein Vorkonditionieren der Stoffprobe auf eine Referenzbedingung, entbehrlich. Mittels des beanspruchten Verfahrens sind Stoffproben mit einer breiten Spanne an thermodynamischen Zuständen, also Temperaturen und Drücken, unmittelbar auf das Vorhandensein von Sauerstoff-Verunreinigungen untersuchbar. Druck- und Temperaturkompensationen sind rein algebraisch oder mittels eines Kennfelds durchführbar, was eine rechenleistungssparende Umsetzung ermöglicht. Das beanspruchte Verfahren ist somit schnell, robust und gleichzeitig präzise. Der Elektrolyseur kann hierzu mit einer entsprechenden Temperaturmessvorrichtung versehen sein, die zu einem Erfassen einer Temperatur der Stoffprobe in der Messvorrichtung ausgebildet sein kann. Weiter kann die Messvorrichtung mit einem entsprechenden Drucksensor ausgestattet sein, der zu einem Erfassen eines Drucks in der Stoffprobe in der Messvorrichtung angeordnet sein kann. Druck und Temperatur der Stoffprobe aus der Wasserstoffströmung sind präzise und inhärent sicher erfassbar. Die Durchführung der Temperaturkompensation und oder der Druckkompensation kann mittels einer Auswertungseinheit erfolgen, die mit der Messvorrichtung koppelbar ist. Die erzielbare Messgenauigkeit wird dadurch gesteigert und gleichzeitig Explosionsschutz erreicht.

Die zugrundeliegende Aufgabenstellung wird ebenso durch ein erfindungsgemäßes Computerprogrammprodukt gelöst. Das Computerprogrammprodukt ist dazu ausgebildet, Messsignale eines Mikrofons zu empfangen und zu verarbeiten. Das Computerprogrammprodukt ist ebenso dazu ausgebildet, eine Konzentration von Sauerstoff-Verunreinigungen in einem Gasgemisch mit Wasserstoff zu ermitteln. Das Ermitteln der Konzentration der Sauerstoff-Verunreinigungen erfolgt unter anderem basierend auf den Messsignalen, die vom Mikrofon an das Computerprogrammprodukt gesendet werden. Erfindungsgemäß ist das Computerprogrammprodukt dazu ausgebildet, zumindest eine Ausführungsform der oben skizzierten Verfahren durchzuführen. Die Merkmale des entsprechenden Verfahrens und des zugehörigen Elektrolyseurs sind folglich einzeln oder in Kombination auf das erfindungsgemäße Computerprogrammprodukt übertragbar. Das Computerprogrammprodukt kann in einer Auswertungseinheit eines Elektrolyseurs ausführbar ausgebildet sein, wobei die Auswertungseinheit zu einer Steuereinheit des Elektrolyseurs gehören kann. Des Weiteren kann das Computerprogrammprodukt monolithisch ausgebildet sein, also auf einer einzigen Hardwareplattform ausführbar ausgebildet sein. Alternativ kann das Computerprogrammprodukt modular ausgebildet sein, also eine Mehrzahl an Teilprogrammen umfassen, die auf separaten Hardwareplattformen ausführbar sind und die durch eine kommunikative Datenverbindung miteinander verbunden sind. Dadurch wirken die Teilprogramme zusammen, um die Funktionalität des Computerprogrammprodukts zu verwirklichen. Das Computerprogrammprodukt kann beispielsweise auf einer Speicherprogrammierbaren Steuerung, kurz SPS, einem Leitrechner, oder einer Computer-Cloud ausführbar ausgebildet sein. Das beanspruchte Computerprogrammprodukt erlaubt es, mit reduziertem Bedarf an Rechenleistung schnell und zuverlässig das Vorliegen von Verunreinigungen zu erkennen. Das Computerprogrammprodukt kann ferner über eine Datenschnittstelle verfügen, über die eine Warnung an einen Benutzer und/oder ein Steuerungsprogramm des Elektrolyseurs ausgebbar ist.

Darüber hinaus wird die oben beschriebene Aufgabe durch eine erfindungsgemäße Verwendung einer Messvorrichtung gelöst. Die Messvorrichtung ist dazu ausgebildet, eine Schallgeschwindigkeit in einem Gasgemisch mit Wasserstoff, insbesondere molekularem Wasserstoff, und Verunreinigungen, insbesondere Sauerstoffverunreinigungen und/oder Stickstoffverunreinigugen, zu ermitteln. Erfindungsgemäß wird die Messvorrichtung in einem Elektrolyseur eingesetzt. Insbesondere wird die Messvorrichtung dazu eingesetzt, während des Betriebs des Elektrolyseurs die Konzentration der Sauerstoff-Verunreinigungen in einer Wasserstoffströmung zu ermitteln, in der das Produkt der durchgeführten Elektrolyse abgeführt wird. Die Merkmale der Messvorrichtung und des Elektrolyseurs, wie oben dargestellt, sind daher einzeln oder in Kombination auf die erfindungsgemäße Verwendung übertragbar. Messvorrichtungen, die dazu geeignet sind, eine Schallgeschwindigkeit in einem Gasgemisch zu messen, sind in einfacher Weise verfügbar und für eine Vielzahl an Gasgemischen geeignet. Die beanspruchte Verwendung erlaubt es, in vorteilhafter Weise beispielsweise mit einer vorhandenen Messvorrichtung, die beispielsweise als Laborausrüstung vorgesehen ist, für eine Anwendung in einem industriellen Elektrolyseur einzusetzen. Der Elektrolyseur kann beispielsweise eine Wasserstoffausbeute von mindestens 0,25 Nm³/h, insbesondere von mindestens 10 Nh³/m, bevorzugt von mindestens 100 Nm³/h, besonders bevorzugt von mindestens 1000 Nm³/h aufweisen. Die Einheit Nm³/h lautet hierbei Normkubikmeter pro Stunde.

Ferner wird die eingangs dargelegte Aufgabenstellung durch ein erfindungsgemäßes Simulationsprogrammprodukt gelöst. Das Simulationsprogrammprodukt umfasst Befehle, die einen Computer dazu veranlassen, bei ihrer Ausführung ein Betriebsverhalten eines Elektrolyseurs zu simulieren. Dementsprechend ist das Simulationsprogrammprodukt dazu ausgebildet, das Betriebsverhalten des Elektrolyseurs nachzustellen. Der Elektrolyseur ist erfindungsgemäß nach einer der oben beschriebenen Ausführungsformen ausgebildet. Das Simulationsprogrammprodukt ist dazu geeignet, das Betriebsverhalten eines entsprechenden Elektrolyseurs betriebsbegleitend und/oder vorauslaufend zu simulieren. Ebenso ist das Simulationsprogrammprodukt dazu geeignet, einen früheren Betrieb des Elektrolyseurs anhand historischer Betriebsdaten nachzustellen.

Das Simulationsprogrammprodukt kann über eine Datenschnittstelle verfügen, über die vorgebbare Betriebsbedingungen für die durchzuführende Simulation einstellbar sind. Die vorgebbaren Betriebsbedingungen können durch einen Benutzer, ein weiteres simulationsgerichtetes Computerprogramm und/oder geeignete Sensorik eingestellt werden. Zu den vorgebbaren Betriebsbedingungen kann eine vorliegende Ausbeute an molekularem Wasserstoff und molekularem Sauerstoff, ein Strömungsverhalten einer Wasserstoffströmung, also eines Gasgemischs mit dem gewonnenen molekularen Wasserstoff, und/oder vorliegende Konzentrationen von Sauerstoff-Verunreinigungen in der Wasserstoffströmung umfassen. Ferner können eine Temperatur, ein Druck, eine Dichte des Gasgemischs, eine darin vorliegende Schallgeschwindigkeit, ein Steuerbefehl an einen Schallemitter, und/oder eine Schädigungsangabe zu einer Trennmembran des Elektrolyseurs zu den vorgebbaren Betriebsbedingungen gehören.

Das Simulationsprogrammprodukt kann ein Physik-Modul umfassen, das ein digitales Abbild des Elektrolyseurs aufweisen kann und/oder ein entsprechendes Rechenmodell. Das Physik-Modul ist dazu geeignet, basierend auf den vorgebbaren Betriebsbedingungen zumindest eine vorgebbare Größe im Elektrolyseur, die von den vorgebbaren Betriebsbedingungen abhängig ist, zu ermitteln. Zu den vorgebbaren Größen, die ermittelt werden, kann beispielsweise ein Messsignal gehören, das infolge einer simulierten Anregung einer Resonanz in einer simulierten Messkammer auftritt. Die physikalischen Effekte, die einer entsprechenden Wirkkette zugrunde liegen, sind beim zugrundeliegenden Elektrolyseur im Wesentlichen algebraisch rechenbar. Insbesondere dadurch, dass die Wandstärke eines Profilkörpers der Messkammer eine Homogenisierung der Temperaturverteilung in der Messkammer gewährleistet, ist die Wirkung von Verunreinigungen auf die Schallgeschwindigkeit im Gasgemisch im Wesentlichen idealisiert rechenbar. Störeffekte und/oder transiente Effekte sind ohne Einschränkung der Realitätstreue beim Simulieren des Betriebsverhaltens vernachlässigbar. Der Erfindung liegt unter anderem die überraschende Erkenntnis zugrunde, dass die eingesetzte Messvorrichtung und die darin ablaufenden thermodynamischen Effekte besonders simulationsfreundlich sind.

Das simulierte Messsignal kann beispielsweise ein Messsignal eines simulierten Mikrofons sein. Alternativ oder ergänzend kann die dadurch ermittelte Schallgeschwindigkeit im Gasgemisch einer Stoffprobe, die sich in der simulierten Messkammer befindet, sein. Hierdurch ist beispielsweise plausibilisierbar, ob eine ermittelte Konzentration an Verunreinigungen, also Sauerstoffverunreinigungen und/oder Stickstoffverunreinigungen, realistisch vorliegen kann oder ob zumindest eine Komponente des Elektrolyseurs, insbesondere das Mikrofon in der Messkammer, eine Temperaturmessvorrichtung und/oder ein Drucksensor beschädigt sein kann. Hierzu kann das Simulationsprogrammprodukt beispielsweise mit einer Datenbank mit historischen Messdaten verbunden sein. Ein schlagartiger Anstieg der Konzentration an Verunreinigungen kann typischerweise durch einen Sensorausfall verursacht sein, während ein kontinuierlicher Anstieg durch eine Degradation der Trennmembran verursacht sein kann. Das Simulationsprogrammprodukt kann zu einer solchen Plausibilisierung eine Künstliche Intelligenz umfassen oder mit einer solchen gekoppelt sein.

Weiter kann das Simulationsprogrammprodukt eine Datenschnittstelle umfassen, über die die vorgebbare Größe als Simulationsresultat ausgebbar ist. Das Simulationsresultat kann über die Datenschnittstelle an einen Benutzer und/oder ein weiteres simulationsgerichtetes Computerprogramm ausgegeben werden. Alternativ oder ergänzend kann das Simulationsresultat an ein Steuerprogramm des Elektrolyseurs ausgegeben werden, um so einen Steuerbefehl zu veranlassen, durch den der Elektrolyseur bei einem erkannten bestimmungswidrigen Betriebszustand in einen sicheren Betriebszustand überführt wird. Das erfindungsgemäße Simulationsprogrammprodukt kann als sogenannter Digitaler Zwilling ausgebildet sein, wie beispielsweise in der Druckschrift US 2017/286572 A1 beschrieben. Der Offenbarungsgehalt von US 2017/286572 A1 wird durch Verweisung in die vorliegende Anmeldung miteinbezogen. Der dem erfindungsgemäßen Simulationsprogrammprodukt zugrundeliegende Elektrolyseur, insbesondere dessen Messvorrichtung, sind in überraschend einfacher Weise simulierbar. Gleichzeitig bietet das Simulationsprogrammprodukt hierbei eine erhöhte Realitätstreue. Insgesamt ist das erfindungsgemäße Simulationsprogrammprodukt zum Überwachen des Betriebs eines entsprechenden Elektrolyseurs geeignet. Die Überwachung kann in im Wesentlichen in Echtzeit erfolgen, was einen besonders reaktionsschnellen, und hierdurch sicheren, Betrieb des Elektrolyseurs erlaubt. Dadurch sind die technisch nutzbaren Lebensdauern von verschleißbehafteten Komponenten im simulierten Elektrolyseur stärker ausnutzbar, was einen unterbrechungsarmen und gleichzeitig wirtschaftlichen Betrieb erlaubt. Das Simulationsprogrammprodukt kann dazu geeignet sein, durch Voraussimulieren des Betriebs des Elektrolyseurs zu ermitteln, wann eine kritische Konzentration an Sauerstoff-Verunreinigungen in der Wasserstoffströmung zu erwarten ist. Ein Wartungsbetrieb des Elektrolyseurs kann dadurch erst kurz vor Erreichen der kritischen Konzentration eingeplant werden. Mittels des erfindungsgemäßen Simulationsprogrammprodukts ist insgesamt ein besonders vorteilhafter Betrieb eines entsprechenden Elektrolyseurs erzielbar.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die Merkmale der in den Figuren gezeigten Ausführungsformen mit den oben skizzierten Merkmalen kombinierbar. Es zeigen im Einzelnen:
- FIG 1: eine schematische Ansicht einer Ausführungsform des beanspruchten Elektrolyseurs;
- FIG 2: eine Messvorrichtung der Ausführungsform des beanspruchten Elektrolyseurs in einem Längsschnitt.

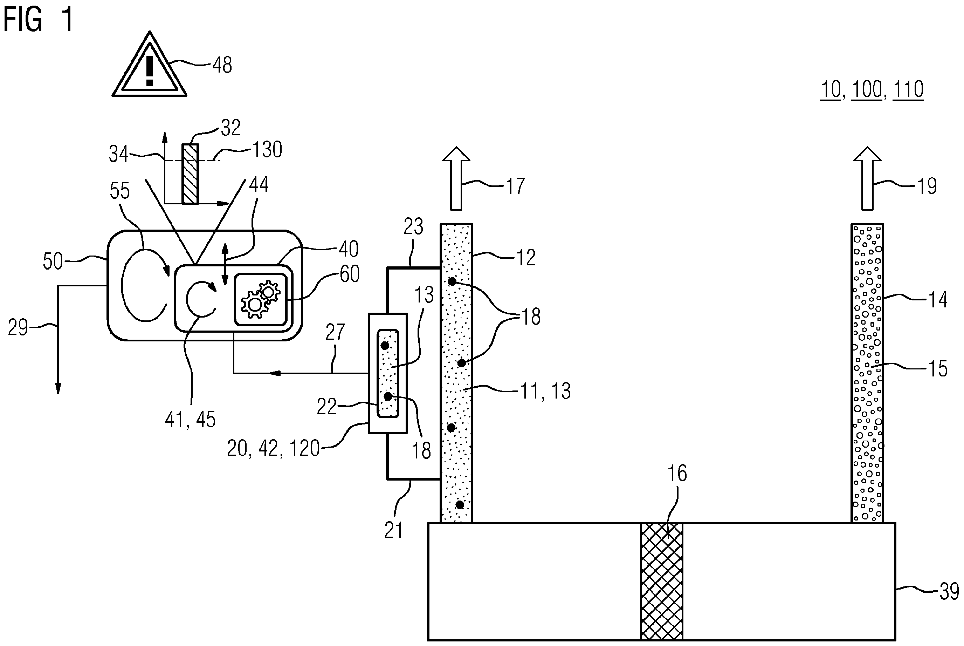

Ein Aufbau einer Ausführungsform des beanspruchten Elektrolyseurs 10 ist in FIG 1 in einer schematischen Darstellung gezeigt. Der Elektrolyseur 10 umfasst eine Elektrolysezelle 39, in während eines Betriebs des Elektrolyseurs 10 eine elektrolytische Reaktion abläuft, durch die aus Wasser molekularer Wasserstoff 13 und molekularer Sauerstoff 15 gewonnen werden. Zum Elektrolyseur 10 gehört auch eine Trennmembran 16, die in der Elektrolysezelle 39 angeordnet ist. Der gewonnene molekulare Wasserstoff 13 wird über eine erste Leitung 12 aus der Elektrolysezelle 39 abgeführt und der molekulare Sauerstoff 15 über eine zweite Leitung 14. Dadurch liegt in der ersten Leitung 12 eine Wasserstoffströmung 17 vor und in der zweiten Leitung 14 eine Sauerstoffströmung 19. Bei einer Beschädigung und/oder Abnutzung der Trennmembran 16 tritt Sauerstoff in die erste Leitung 12 ein, so dass die Wasserstoffströmung 17 ein Gasgemisch 11 aus molekularem Wasserstoff 13 und Sauerstoff-Verunreinigungen 18 bildet. Bei einer hinreichenden Konzentration von Sauerstoff-Verunreinigungen 18 im Gasgemisch 11 wird dieses entzündbar. Alternativ oder ergänzend zu den Sauerstoffverunreinigungen 18 können auch nicht näher gezeigte Stickstoffverunreinigungen in der Wasserstoffströmung 17 vorliegen.

An die erste Leitung 12 ist eine Messvorrichtung 20 hydraulisch angeschlossen, so dass aus dem Gasgemisch 11 kontinuierlich, also betriebsbegleitend, eine Stoffprobe 22 in die Messvorrichtung 20 umgeleitet wird. Die Stoffprobe 22 ist in ihrer Zusammensetzung aus molekularem Wasserstoff 13 und Sauerstoff-Verunreinigungen 18 repräsentativ für die Wasserstoffströmung 17 mit den Sauerstoff-Verunreinigungen 18 in der ersten Leitung 12, ist also das gleiche Gasgemisch 11. Die Messvorrichtung 20 ist über eine Zufuhrleitung 21 und eine Abfuhrleitung 23 mit der ersten Leitung 12 verbunden und wird von der Stoffprobe 22 durchströmt. Die Messvorrichtung 20 ist mit einer Auswertungseinheit 40 verbunden, die wiederum zu einer Steuereinheit 50 der Elektrolyseurs 10 gehört. Auf der Auswertungseinheit 40 ist ein Computerprogrammprodukt 45 ausführbar gespeichert, das dazu ausgebildet ist, eine Konzentration 32 der Sauerstoff-Verunreinigungen 18 in der Stoffprobe 22, und damit auch in der Wasserstoffströmung 17, zu erfassen. Das Computerprogrammprodukt 45 ist dazu geeignet, Messsignale 27 von der Messvorrichtung 20 zu empfangen und auszuwerten. Die Auswertungseinheit 40 ist über eine Datenschnittstelle 44 mit der Steuereinheit 50 verbunden, so dass der Elektrolyseur 10 in Reaktion auf die erfasste Konzentration 32 an Sauerstoff-Verunreinigungen 18 ansteuerbar ist. Dazu ist die Steuereinheit 50 mit einem Frequenzgenerator und einem darauf ausführbar gespeicherten Steuerungsprogramm 55 versehen, das dazu ausgebildet ist, Steuerbefehle 29 zu erzeugen und auszugeben. Weiter ist auf der Auswertungseinheit 40 ein Simulationsprogrammprodukt 60 ausführbar gespeichert, das als Digitaler Zwilling des Elektrolyseurs 10 ausgebildet ist.

Auf dem Elektrolyseur 10 ist ein Verfahren 100 zum Erfassen der Konzentration 32 an Sauerstoff-Verunreinigungen 18 in der Wasserstoffströmung 17 durchführbar. Das Verfahren 100 geht von einem ersten Schritt 110 aus, in dem der Elektrolyseur 10, wie in FIG 1 versinnbildlicht, betrieben wird, also zumindest eine Wasserstoffströmung 17 aus der Elektrolysezelle 39 vorliegt. Weiter umfasst das Verfahren 100 einen zweiten Schritt 120, in dem mittels der Messvorrichtung 20 eine Schallgeschwindigkeit 42 im Gasgemisch 11, das der Messvorrichtung 20 als Stoffprobe 22 zugeleitet wird, erfasst wird. Die erfasste Schallgeschwindigkeit 42 wird durch das Computerprogrammprodukt 40 mit einer Referenz-Schallgeschwindigkeit 41 im zweiten Schritt 120 verglichen. Ferner umfasst das Verfahren 100 einen dritten Schritt 130, der ebenfalls im Computerprogrammprodukt 45 abläuft. Im dritten Schritt 130 wird die Konzentration 32 der Sauerstoff-Verunreinigungen 18 im Gasgemisch 11 ermittelt. Dies erfolgt basierend auf dem Vergleich, der im zweiten Schritt 120 durchgeführt wird. Weiter wird im dritten Schritt 130 eine Warnung 48 ausgegeben, wenn die ermittelte Konzentration 32 der Sauerstoff-Verunreinigungen 18 einen vorgebbaren Grenzwert 34 betragsmäßig übersteigt.

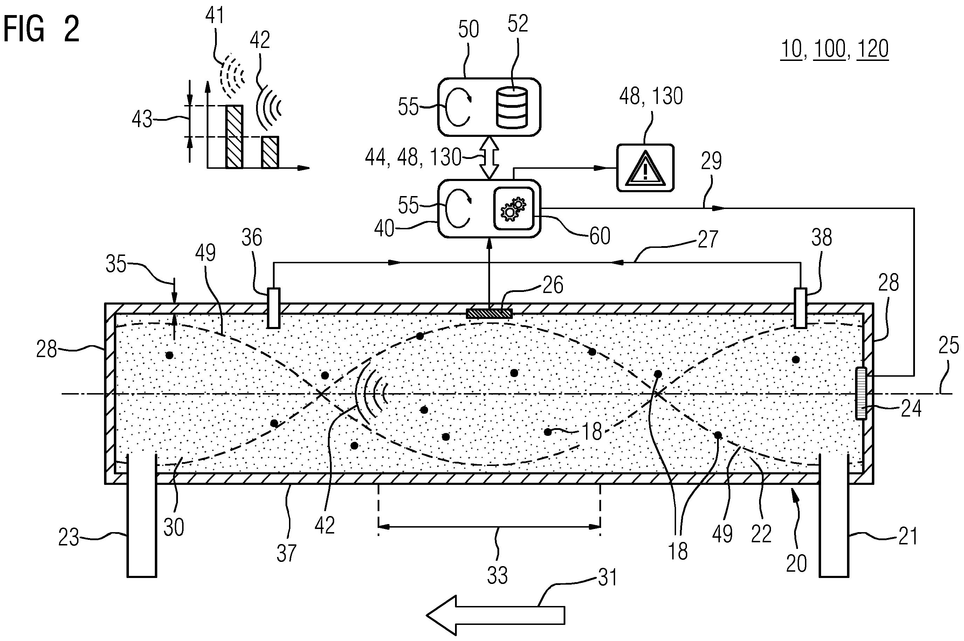

Eine Messvorrichtung 20 gemäß der Ausführungsform nach FIG 1 ist in FIG 2 schematisch in einem Längsschnitt gezeigt. Die Messvorrichtung 20 ist im Elektrolyseur 10, wie in FIG 1 dargestellt, einsetzbar. Die Messvorrichtung 20 ist dazu ausgebildet, unter anderem bei einem Verfahren 100 zum Erfassen einer Konzentration 32 einer Sauerstoff-Verunreinigung 18 in einer Wasserstoffströmung 17, wie in FIG 1 skizziert, den zweiten Schritt 120 durchzuführen. Die Messvorrichtung 20 umfasst eine Messkammer 30, die im Betrieb von einer Stoffprobe 22 durchströmt wird, die über eine Zufuhrleitung 21 zugeleitet wird und über eine Abfuhrleitung 23 abgeführt wird. Die Messkammer 30 wird entlang einer Strömungsrichtung 31 von der Stoffprobe 22 durchströmt. Weiter weist die Messkammer 30 einen Profilkörper 37, der sich im Wesentlichen entlang einer Hauptachse 25 erstreckt. Der Profilkörper 37 weist an seinen Mantelflächen eine Wandstärke 35 auf, so dass der Profilkörper 37 als thermischer Leiter und thermischer Puffer dient. Der Profilkörper 37 ist aus einem metallischen Werkstoff hergestellt, beispielsweise einer Aluminiumlegierung, wodurch in der Stoffprobe 22 in der Messkammer 30 eine im Wesentlichen homogene Temperaturverteilung vorliegt. Der Profilkörper 37, und damit die Messkammer 30, ist als seinen Stirnflächen 28 verschlossen ausgebildet.

An einer der Stirnflächen 28 ist ein Schallemitter 24 angeordnet, der durch die Auswertungseinheit 40 über Steuerbefehle 29 ansteuerbar ist. Der Schallemitter 24 ist durchstimmbar ausgebildet, so dass in der Messkammer 30, und damit in der Stoffprobe 22, Schallwellen mit vorgebbarer Frequenz bzw. Wellenlänge erzeugbar ist. Insbesondere sind harmonische Schwingungen 49 erzeugbar, wobei in FIG 2 exemplarisch eine erste harmonische Schwingung gezeigt ist. Dabei ist in FIG 2 der Schalldruck der harmonischen Schwingung 49 gezeigt. Entlang der Hauptachse 15 ist in einem mittleren Abschnitt 33 an einer Wandung der Messkammer 30 ein Mikrofon 26 angeordnet. Das Mikrofon 26 ist dazu geeignet, die harmonischen Schwingungen 49 zu erfassen. Durch die Positionierung des Mikrofons 26 im mittleren Abschnitt 33 ist es dazu geeignet, Amplitudenmaxima von harmonischen Schwingungen 49 geradzahliger Ordnung zu erfassen. Hierzu ist das Mikrofon 26 mit der Auswertungseinheit 40 verbunden, so dass Messsignale 27 an die Auswertungseinheit 40 übertragbar sind. Über ein entsprechendes Durchstimmen des Schallemitters 24 ist erkennbar, bei welcher Anregungsfrequenz des Schallemitters 24 eine harmonische Schwingung 49 geradzahliger Ordnung in der Messkammer 30 vorliegt. Über das Mikrofon 26 ist ebenfalls eine vorliegende Resonanzfrequenz der harmonischen Schwingung 49 ermittelbar. Es besteht ein physikalischer Zusammenhang zwischen einer vorliegenden Resonanzfrequenz in der Stoffprobe 22 und der Schallgeschwindigkeit 42 darin. Im zweiten Schritt 120 wird so die vorliegende Schallgeschwindigkeit 42 mit einer Referenz-Schallgeschwindigkeit 43 verglichen und eine Schallgeschwindigkeits-Differenz 43 ermittelt. Die Referenz-Schallgeschwindigkeit 41 entspricht einer Schallgeschwindigkeit in einer Wasserstoffströmung 17, die frei von Sauerstoff-Verunreinigungen 18 ist. Die Schallgeschwindigkeits-Differenz 43 stellt ein Maß für die Konzentration der Sauerstoff-Verunreinigungen 18 dar. Das Ermitteln der Konzentration 32 der Sauerstoff-Verunreinigungen 18 erfolgt in einem nicht näher gezeigten dritten Schritt 130.

Die Messvorrichtung 20 ist an der Wandung der Messkammer 30 mit einer Temperaturmessvorrichtung 36 und einem Drucksensor 38 versehen, die dazu ausgebildet sind, eine vorliegende Temperatur und einen Druck in der Messkammer 30 zu erfassen. Die Temperaturmessvorrichtung 36 und der Drucksensor 38 sind mit der Auswertungseinheit 40 gekoppelt und dazu geeignet, entsprechende Messwerte als Messsignale 27 an die Auswertungseinheit 40 zu übertragen. Das Ermitteln der Schallgeschwindigkeit 42 in der Stoffprobe 22 erfolgt basierend auf den Messsignalen 27 von der Temperaturmessvorrichtung 36 und/oder dem Drucksensor 38 temperaturkompensiert und/oder druckkompensiert. Eine entsprechende Druck- und/oder Temperaturkompensation wird durch das Computerprogrammprodukt 45 auf der Auswertungseinheit 40 bereitgestellt.

Wenn im dritten Schritt 130, wie beispielsweise in FIG 1 skizziert, die Konzentration 32 der Sauerstoff-Verunreinigungen 18 ermittelt wird und diese einen vorgebbaren Grenzwert 34 übersteigt, wird auch eine Warnung 48 an einen Benutzer und/oder eine Datenschnittstelle 44 ausgegeben. Die Auswertungseinheit 40 gehört zur Steuereinheit 50 des Elektrolyseurs 10 und ist mit dieser über die Datenschnittstelle 44 verbunden. Auf der Steuereinheit 50 ist ein Steuerungsprogramm 55 ausführbar gespeichert, durch das nicht näher gezeigte Steuerbefehle 29 zum Vorgeben eines Betriebsmodus des Elektrolyseurs 10 ausgegeben werden können. In der Steuereinheit 50 ist auch eine Datenbank 52 ausgebildet, in der erfasste Konzentrationen 32 der Sauerstoff-Verunreinigungen 18 aus historischen Messdaten auswertbar bereitgestellt werden. Die historischen Messdaten können am Elektrolyseur 10 selbst erfasst sein und/oder an baugleichen Elektrolyseuren. Die Datenbank 52 ist durch einen Digitalen Zwilling 60 des Elektrolyseurs 10 auswertbar. Dadurch ist bei einem Anstieg der Konzentration 32 der Sauerstoff-Verunreinigungen 18 die Ursache hierfür ermittelbar. Ferner ist der Elektrolyseur 10 im Digitalen Zwilling 60 abgebildet, der auf der Auswertungseinheit 40 betriebsbegleitend ausgeführt wird. Der Digitale Zwilling 60 ist dazu ausgebildet, eine defekte Komponente des Elektrolyseurs 10, insbesondere eine beschädigte oder abgenutzte Trennmembran 16, wie in FIG 1 gezeigt, zu erkennen.

## Patentansprüche

1. Elektrolyseur (10), umfassend eine Trennmembran (16) zum Herstellen von Wasserstoff (13) und Sauerstoff (15) aus Wasser, und eine erste Leitung (12) zum Abführen des Wasserstoffs (15) in einer Wasserstoffströmung (17), wobei im Bereich der ersten Leitung (12) eine Messvorrichtung (20) zum Erfassen von Verunreinigungen (18) in der Wasserstoffströmung (17) angeordnet ist, **dadurch gekennzeichnet, dass** die Messvorrichtung (20) dazu ausgebildet ist, eine akustische Kenngröße in der Wasserstoffströmung (17) zu erfassen.

2. Elektrolyseur (10) nach Anspruch 1, **dadurch gekennzeichnet, dass** die akustische Kenngröße eine Schallgeschwindigkeit (42) in der Wasserstoffströmung (17) ist und/oder die Messvorrichtung (20) als Schallgeschwindigkeitsmessvorrichtung ausgebildet ist.

3. Elektrolyseur (10) nach Anspruch 1 oder 2, **dadurch gekennzeichnet, dass** die Messvorrichtung (20) dazu ausgebildet ist, eine akustische Resonanz in einer Stoffprobe (22), die der Wasserstoffströmung (17) entnommen ist, anzuregen und zu erfassen.

4. Elektrolyseur (10) nach einem der Ansprüche 1 bis 3, **dadurch gekennzeichnet, dass** die Messvorrichtung (20) über ein Mikrophon (26) verfügt, das entlang der Hauptachse (15) einer Messkammer (20) in einem mittleren Abschnitt (33) angeordnet ist.

5. Elektrolyseur (10) nach einem der Ansprüche 1 bis 4, **dadurch gekennzeichnet, dass** die Messvorrichtung (20) mit einer Auswertungseinheit (40) ausgestattet ist, die zu einem Ermitteln einer Konzentration (32) der Verunreinigung (18) in der Wasserstoffströmung (17) ausgebildet ist.

6. Elektrolyseur (10) nach einem der Ansprüche 1 bis 5, **dadurch gekennzeichnet, dass** die Messvorrichtung (20) mit einer Temperaturmessvorrichtung (36) versehen ist.

7. Elektrolyseur (10) nach einem der Ansprüche 1 bis 6, **dadurch gekennzeichnet, dass** das die Messvorrichtung (20) mit einem Drucksensor (38) versehen ist.

8. Elektrolyseur (10) nach einem der Ansprüche 1 bis 7, **dadurch gekennzeichnet, dass** Mantelflächen der Messkammer () durch einen Profilkörper (37) gebildet sind, eine Wandstärke (35) des Profilkörpers (37) zu einem Homogenisieren einer Temperaturverteilung in der Messkammer (20) ausgebildet ist.

9. Elektrolyseur (10) nach einem der Ansprüche 1 bis 8, **dadurch gekennzeichnet, dass** der Elektrolyseur (10) mit einer Künstlichen Intelligenz (52) ausgestattet ist, die dazu ausgebildet ist, eine Ursache für einen Anstieg einer Konzentration (32) von Verunreinigungen (18) anhand von historischen Messdaten des Elektrolyseurs (10) und/oder baugleichen Elektrolyseuren (10) zu ermitteln.

10. Verfahren (100) zum Erfassen einer Konzentration (32) einer Verunreinigung (18) in Wasserstoff (13) in einer Wasserstoffströmung (17) in einem Elektrolyseur (10), umfassend die Schritte:
a) Betreiben des Elektrolyseurs (10) und Einleiten eines Gasgemisches (11) mit Wasserstoff (13) und Verunreinigungen (18) in eine erste Leitung (12);
b) Erfassen einer Schallgeschwindigkeit (42) im Gasgemisch (11) und Vergleichen mit einer Referenz-Schallgeschwindigkeit (43);
c) Ermitteln der Konzentration der Verunreinigungen (18) im Gasgemisch (44) anhand des Vergleichs im Schritt b) und Ausgeben einer Warnung (48), wenn die ermittelte Konzentration (32) der Verunreinigungen (18) einen vorgebbaren Grenzwert (34) übersteigt.

11. Verfahren (100) nach Anspruch 10, **dadurch gekennzeichnet, dass** das Verfahren (100) an einem Elektrolyseur (10) durchgeführt wird, der nach einem der Ansprüche 1 bis 9 ausgebildet ist.

12. Verfahren (100) nach Anspruch 10 oder 11, **dadurch gekennzeichnet, dass** die Schallgeschwindigkeit (42) im Schritt b) unter Berücksichtigung einer erfassten Temperatur und/oder eines erfassten Drucks des Gasgemischs (11) ermittelt wird.

13. Computerprogrammprodukt (45) zum Empfangen und Auswerten von Messsignalen (27) eines Mikrofons (26), das zum Ermitteln einer Konzentration (32) von Verunreinigungen (18) in einem Gasgemisch (11) mit Wasserstoff (13) ausgebildet ist, **dadurch gekennzeichnet, dass** das Computerprogrammprodukt (45) dazu ausgebildet ist, ein Verfahren (100) nach einem der Ansprüche 10 bis 12 durchzuführen.

14. Verwendung einer Messvorrichtung (20), die dazu ausgebildet ist, eine Schallgeschwindigkeit (42) in einem Gasgemisch (11) mit Wasserstoff (13) und Verunreinigungen (18) zu ermitteln, **dadurch gekennzeichnet, dass** die Messvorrichtung (20) in einem Elektrolyseur (10) eingesetzt wird.

15. Simulationsprogrammprodukt (60), umfassend Befehle, die bei einer Ausführung durch einen Computer diesen veranlassen, ein Betriebsverhalten eines Elektrolyseurs (10) nach einem der Ansprüche 1 bis 9 zu simulieren.
